# EUROPEAN PATENT APPLICATION

(11) **EP 3 016 080 A1**
(43) Date of publication of application: **04.05.2016**
(21) Application number: 14190579.4
(22) Date of filing: 28.10.2014
(51) Int. Cl.: G08B 13/196, G06K 9/00

(54) **Calibration of metadata event rules**

(71) Applicant: Axis AB, 223 69 Lund (SE)
(72) Inventor: Skans, Markus, 245 42 Staffanstorp (SE); Träff, Gustav, 247 31 Södra Sandby (SE); Ljungqvist, Martin, 226 49 Lund (SE); Juhlin, Fred, 247 71 Genarp (SE)
(74) Representative: Awapatent AB

(57) **Abstract**

The present application relates to methods and systems for calibrating a metadata event rule. A metadata stream is recorded and played back to the operator who can test different settings for the metadata event rule. Visual feedback is provided to the operator which indicates which objects fulfil the metadata event rule with a current setting.

## Description

### Technical field

The present invention relates to methods and devices for calibrating metadata event rules in a video monitoring system.

### Background

Monitoring cameras are used in many different applications, both indoors and outdoors. In order to utilize the information from such cameras in an efficient manner, video analytics methods are often used. Event rules based on various metadata can be set up which cause a monitoring system to take certain action in case a specific set of conditions are fulfilled. An example of such a rule could be that if a motion takes place in a preconfigured motion detection window within the monitored scene, and a large enough number of pixels are involved in the motion, a motion detection alarm should be triggered and a recording started.

The event rules are usually set up by an operator of the system who configures settings such as the placement of motion detection windows, the sensitivity of motion detection etc. In order to ensure that the event rules set up in the system work as intended, the operator may need help from a colleague who walks around in the scene to create situations where the event rules should trigger. Since this may prove to be a somewhat cumbersome process, improvements in this area are needed.

### Summary of the invention

In view of the above, it is thus an object of the present invention to provide an improved method of calibrating settings for metadata event rules in a video monitoring system.

According to a first aspect of the invention a method of calibrating metadata event rules for a video monitoring system comprises analyzing a video stream of image frames from a camera monitoring a scene, to generate a metadata stream with object metadata for objects present in the scene, recording the metadata stream, selecting a time interval in the recorded metadata stream, selecting a setting for a metadata event rule, performing a playback of the selected time interval of the recorded metadata stream, analyzing the selected time interval of the recorded metadata stream to find any objects which fulfill the metadata event rule with the selected setting, adding a first type of visual indication onto a representation of the scene during the playback for any object fulfilling the rule, and repeating the steps of selecting a setting, analyzing the metadata stream, performing a playback and adding a first type of visual indication, for a different setting of the metadata event rule.

In this way a method is provided by which an operator is able to evaluate the impact of settings of a metadata event rule in a convenient, quick and user friendly manner. The calibration of metadata event rules is simplified and the amount of processing power required is also reduced, since the metadata stream is generated only once. The fact that the same scenario may be repeated for different settings enhances robustness of the calibration procedure.

The step of adding a first type of visual indication may comprise adding a second type of visual indication for any object of the recorded metadata stream not fulfilling the rule. This step further increases the user friendliness of the method since it will be even easier for a user to see the result of a current event rule setting.

The first type of visual indication may include an overlay having a predetermined color, graphical symbol or text, and in the case that both objects that fulfil the rule and objects that do not fulfil the rule are to be provided with visual indications, these first and second type of visual indications may include at least one of: an overlay having a different color, pattern or outline for an object fulfilling the rule and for an object not fulfilling the rule, or an overlay having a different graphical symbol or text for an object fulfilling the rule and for an object not fulfilling the rule. All of these examples provide the user with a clear and intuitive feedback on the result of a current metadata event rule setting. The different types of visual indications could be combined to further increase the ease of use for the operator.

The method may further comprise the step of recording the video stream, wherein the representation of the scene is a playback of the recorded video stream during the time interval. In this case the visual indication is usually added to the representation of the object in the video stream as an overlay to the video which follows the position of the object as it moves through the scene. This provides a very user friendly and intuitive way of showing the results of the metadata event rule setting since the representation of the object as captured by the camera is visible to the user.

The first type of visual indication may include a change of size of a visual representation of any object fulfilling the rule, in the playback of the video stream. This is another convenient way of providing visual feedback to the operator in an intuitive and easily spotted manner.

The representation of the scene may as an alternative be a snapshot of the scene or a visual representation of a background model of the scene. In this case the visual indications may e.g. include an outline or a symbolic representation of the objects which is overlaid onto a more or less static background image. This embodiment may be useful in a situation where it is not desired to record the actual video, e.g. for privacy reasons.

The object metadata for an object present in the scene may include at least one of the following: size, color, shape, center of gravity, object type, a coordinate for the object's appearance in the scene, a coordinate for the object's disappearance from the scene, an appearance time of the object, a disappearance time of the object, an amount of time during which the object is present in the scene, a velocity of the object, an identity of the object.

The metadata event rule with the selected setting may specify at least one of the following: a size interval, a color, a shape, an area of the scene, an age of an object, a length of travel of an object, a direction of travel of an object, a velocity interval, a selection of object identities. In other words, the metadata event rule with the selected setting may set a condition for any type of metadata included in the metadata stream.

Objects present in the scene are found by at least one of the following: determining differences between an image frame and one or more previous image frames, determining differences between an image frame and a background model, or detecting specific object features in an image frame to find objects such as faces, humans, license plates or vehicles.

The method may also comprise adding information regarding camera settings during the recording, such as a pan, tilt, or zoom position, to the metadata stream, and including a specification of such camera settings in the metadata event rule setting. In this way it is possible to calibrate a complete event rule setting, also including metadata that is not produced by an analysis of the video.

According to a second aspect of the invention, an event based video monitoring system comprises an input arranged to receive a video stream from a camera monitoring a scene, a video analytics unit arranged to analyze the video stream and generate a metadata stream with object metadata for objects present in the scene, a recording unit arranged to record the metadata stream, an input arranged to receive a selection of a setting for a metadata event rule and a selection of a time interval, a metadata event rule engine arranged to analyze the recorded metadata stream during the selected time interval to find any objects which fulfill the metadata event rule with the selected setting, and for any object fulfilling the rule, output an indication that the object fulfills the rule, a playback unit arranged to receive the indication from the metadata rule engine and for any object fulfilling the rule add a first type of visual indication onto a representation of the scene.

This second aspect of the invention is associated with the same advantages as the first aspect.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

The invention will now be described in more detail by way of example and with reference to the accompanying schematic drawings, in which:
- Fig.1: illustrates a scene monitored by a camera.
- Fig. 2: shows a user interface for a security operator.
- Fig. 3: illustrates a method of calibrating metadata event rules.
- Fig. 4: illustrates an event based video monitoring system.

### Detailed description of embodiments

A security system operator may use different event rules for the video captured by a monitoring camera, so that when a specific set of conditions are fulfilled, a predetermined action, such as start of a recording or an alarm, takes place. In order to be certain that the event rules are triggered as intended by the security operator, there is a need to calibrate the event rules in order to find the correct settings which will give the desired outcome. The calibration normally involves testing a number of different settings. The settings then would need to be tested on live video, but since many monitored scenes such as warehouses, storage rooms etc are sparsely visited, the operator may need to ask a colleague to walk around in the monitored scene, in order to produce video which will trigger the event rules to be tested. As the inventors have realized, it would be desirable to be able to instead repeat a real scenario for different event rule settings, while not having to perform a new analysis of the video for each setting, thereby saving processing power. Testing a changed parameter setting on the same metadata will also have the advantage of making the calibration more robust. When a tested setting creates a false positive or missed object of interest, another setting may now be tested on the same metadata in order to make sure that the same problem does not occur.

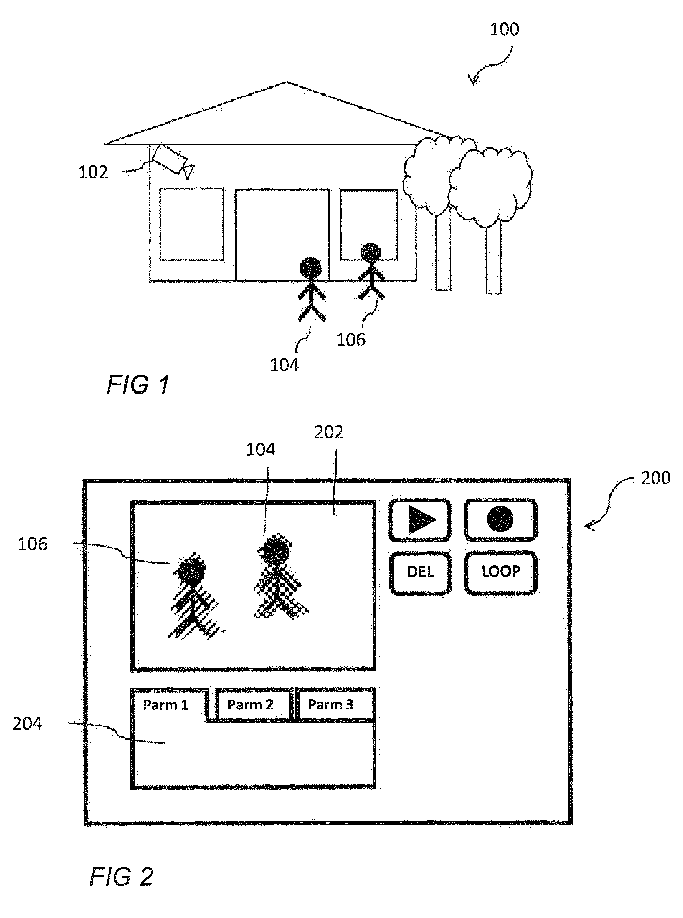

In order to explain this concept more in detail, it is referred to the following description with accompanying figures. To start with, in Fig. 1 a scene 100 monitored by a camera 102 is illustrated. In the scene two objects 104 and 106 in the form of humans are present. The camera 102 captures a video stream of the scene 100, and the video stream is analyzed to produce a metadata stream including object metadata of objects present in the video. The metadata stream is recorded, optionally together with the video stream itself, and this recorded metadata stream, or a time interval thereof, is then used to calibrate event rule settings. In addition, settings of the camera may also be included in the metadata stream. Such setting may include a pan, tilt or zoom, PTZ, position, or other optical or mechanical information that is available from the camera. Thus, the metadata stream may for each time point include information on objects which are present in the scene at that time point and their behavior or appearance at that time point, as well as information on the camera settings valid at that time point, such as a PTZ position.

The recording may be achieved in different ways. The camera may e.g. be set to record continuously, to start a recording at a certain time point, or when receiving a predetermined trigger. This trigger may be input from an external sensor, such as a passive infrared, PIR, sensor, or a user starting a recording, or even an event rule being fulfilled.

In whatever way the recording of the metadata stream is achieved, it can now be used to calibrate settings of one or more event rules by performing a playback of the metadata stream, or of an interesting portion, i.e. time interval, thereof, applying the event rule with a selected setting, usually by applying a filter with parameters specified according to the event rule, and visualizing the result. This process is then repeated until a satisfactory result is achieved, i.e. until the objects that are supposed to fulfil the rule actually fulfil the rule, and the objects that are not supposed to fulfil the rule do not do so.

It may be noted that the objects in the scene may be found using available object detection procedures, such as subtraction of one or more previous images, possibly in the form of a background model, from a current image to find any differences which indicates a moving or appearing object, or by using a Viola-Jones type object detection framework using a cascade of classifier, which detects specific objects types such as faces, humans, license plates, vehicles etc. A framework of this type is e.g. described in the article by P. Viola and M. Jones "Rapid object detection using a boosted cascade of simple features", in proceeding of IEEE Computer Society Conference on Computer Vision and Pattern Recognition, 2001.

The object metadata in the metadata stream may contain information such as the size, usually in pixels, of an object, the color of an object, and the shape of an object, which may be expressed as a number of pixel coordinates outlining the object. The object metadata may also include the center of gravity of an object, typically expressed as a pixel coordinate. The object type, such as "human" or "vehicle", which typically is available if a Viola-Jones type object detection is used, may also be included in the object metadata.

Other information that might be included in the object metadata is the position and time point where and when the object appeared in or disappeared from the scene. The appearance and disappearance position would usually be expressed in pixel coordinates. The amount of time during which the object is present in the scene may also be included in the object metadata, as may the velocity of the object, e.g. a mean velocity and a velocity at several points in time during the recording. The object metadata may in some cases include an identity of the object.

A metadata event rule is a set of conditions for one or more of the object metadata. A set of such conditions is herein denoted a setting of a metadata event rule. An event rule with a specified setting can be chosen to include any combination of conditions to be fulfilled by the metadata for a certain object. A common example is to choose that the object size should lie in a certain interval, e.g. be bigger or smaller than a value, or be between two values. Another common example is that the metadata event rule specifies that the position of the object should be within a certain area of the scene, e.g. that the center of gravity of the object should have pixel coordinates within - or outside - a certain interval, in order to fulfil the rule.

In Fig. 2 a user interface 200 is shown which may be used when calibrating event rules according to the invention. The user interface includes an area 202 which shows the visualization of the result of the current settings of the event rule that is tested. In the current example, the visualization is rendered on a recording of the video stream, wherein the two objects 104 and 106 are visible. In the shown example, the two objects have different visual indications depending on if they fulfil a current event rule setting or not, but it would also be possible to only use a single visual indication, only for the objects that fulfil the event rule.

In the example in Fig. 2, the object 104 has a first type of visual indication which is a checkered overlay, and the object 106 has a second type of visual indication which is a striped overlay. In this example, the checkered overlay indicates that the object 104 fulfils the event rule to be calibrated, when a certain setting is used, and the striped overlay indicates that object 106 does not fulfil the same rule with the same setting. Various other types of overlays may be used as visual indications, such as a color, which could be more or less transparent, or an outline having a certain pattern or color. Another option is to enlarge those objects that fulfil the rule. This option would usually be combined with the option of adding the visual indication to a playback of the video stream, and the representation of the object in the video stream of an object that fulfils the metadata event rule with the current setting would then be changed to cover a larger amount of pixels, e.g. by duplication of the pixels belonging to the representation of the object.

In case the visual indication is instead added to a static representation of the scene, such as a snapshot or a background model, the visual indication may e.g. be an outline of the objects, possibly combined with a text overlay which may be used to list certain object metadata, such as the specific object metadata which fulfilled the rule or did not fulfil the rule. The metadata may also include an image representation of the object, such as a snapshot or even a part of the video from the video strem, and this representation may then be used in the visualization of the object in the static representation of the scene, in combination with the relevant visual indication.

In the example shown in Fig. 2, the settings of the event rule can be changed by choosing different values in the different parameter tabs 204. When testing or calibrating event rules, the user may loop the recorded metadata stream and change the parameters, i.e. the setting of the event rule, until the desired result is shown in the area 202.

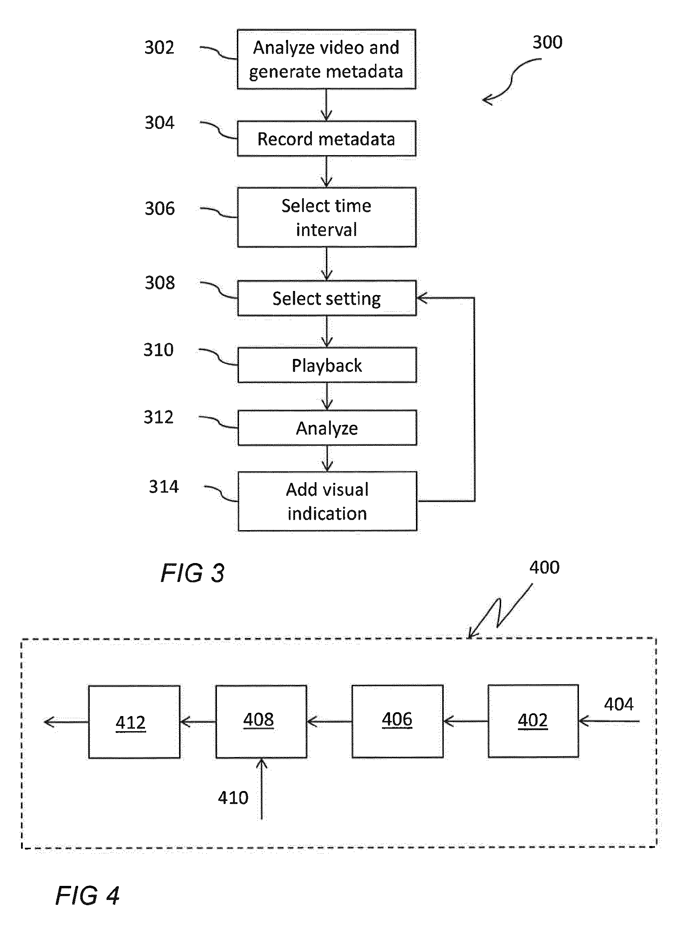

Fig. 3 illustrates a method 300 according to the invention. In step 302 a video stream from a monitoring camera is analyzed and a stream of metadata is generated. In step 304 this stream of metadata is recorded. The recording of the metadata may take place in parallel with the analysis of the video stream, and may be combined with a recording of the video stream itself. In step 306 a time interval of the recorded metadata stream is selected. The time interval of the metadata stream will be used for calibrating the settings of one or more metadata event rules. In step 308 an initial setting for a metadata event rule is selected. To test the result of this setting, the metadata stream is played back in step 310 and analyzed in step 312.

The outcome of using the selected setting is visualized by adding a visual indication to any object that fulfils the metadata rule with the selected setting, to a representation of the scene in step 314. The representation of the scene may in the simplest variant be a playback of the video stream during the same time interval. The playback, the analysis and the adding of the visual indication may take place in parallel. In order to evaluate the selection of different settings, another setting is now selected, and the same time interval is played back and analyzed and the visual indication is added to any object that fulfils the rule. These steps are repeated using different settings until a satisfactory result is reached. The setting may be changed during the playback, especially if the playback is looped. The analysis is usually able to use the new setting and change the visual indication fairly quickly, since the metadata stream does not need to be regenerated

Fig. 4 illustrates a video monitoring system 400 according to the invention. The system 400 includes a video analytics unit 402 which has an input 404 which receives a video stream, e.g. from the monitoring camera 102 in Fig. 1. The video analytics unit 402 analyzes the video stream and generates a metadata stream with object metadata for objects in the scene monitored by the monitoring camera. The system 400 also includes a recording unit 406 which receives the metadata stream from the video analytics unit 402 and records it.

The recorded metadata stream is provided to a metadata event rule engine 408, which also receives, from an input 410, a selection of a setting for a metadata event rule as well as a selection of a time interval of the recorded metadata stream. The metadata event rule engine 408 analyzes the recorded metadata stream during the selected time interval to find any objects that fulfil the metadata event rule with the selected setting, and, for any object that fulfils the rule, outputs an indication that the specific object fulfils the rule.

A playback unit 412 receives the indication and adds a visual indication onto a representation of the scene that shows that the specific object fulfilled the rule with the current setting. As described above, the representation of the scene might be a recording of video which may be recorded together with the metadata stream, and the playback unit 412 then plays the recording of the video and adds the visual indication to the representation of the object in the video at those times in the recording that the object fulfils the rule.

The different units in the event based video monitoring system 400 may be arranged in one and the same physical apparatus, or they may reside at different nodes in a network. As an example, the generation of the metadata stream may take place at the camera, and the recording of the metadata stream may take place at a server. The playback, the analysis of the metadata stream and the adding of the visual indications may also take place at the server and be displayed to the operator at a monitor connected directly or via a network to the server.

To summarize, the present application relates to methods and systems for calibrating a metadata event rule. A metadata stream is recorded and played back to the operator who can test different settings for the metadata event rule. Visual feedback is provided to the operator which indicates which objects fulfil the metadata event rule with a current setting.

### List of reference numerals

- 100: Scene
- 102: Camera
- 104: Object
- 106: Object
- 200: User interface
- 202: User interface area
- 204: Parameter tabs
- 400: Video monitoring system
- 402: Video analytics unit
- 404: Input
- 406: Recording unit
- 408: Metadata event rule engine
- 410: Input
- 412: Playback unit

## Claims

1. A method of calibrating metadata event rules for a video monitoring system, comprising:
analyzing a video stream of image frames from a camera monitoring a scene, to generate a metadata stream with object metadata for objects present in the scene,
recording the metadata stream,
selecting a time interval in the recorded metadata stream,
selecting a setting for a metadata event rule,
performing a playback of the selected time interval of the recorded metadata stream,
analyzing the selected time interval of the recorded metadata stream to find any objects which fulfill the metadata event rule with the selected setting, adding a first type of visual indication onto a representation of the scene during the playback for any object fulfilling the rule, and
repeating the steps of selecting a setting, analyzing the metadata stream, performing a playback and adding a first type of visual indication, for a different setting of the metadata event rule.

2. The method of claim 1, wherein the step of adding a first type of visual indication further comprises adding a second type of visual indication for any object of the recorded metadata stream not fulfilling the rule.

3. The method of any of the preceding claims, wherein the first type of visual indication includes an overlay having a predetermined color, graphical symbol or text.

4. The method of claim 2, wherein the first and second type of visual indications include at least one of the following:
an overlay having a different color, pattern or outline for an object fulfilling the rule and for an object not fulfilling the rule,
an overlay having a different graphical symbol or text for an object fulfilling the rule and for an object not fulfilling the rule.

5. The method of any of the preceding claims, further comprising
recording the video stream,
wherein the representation of the scene is a playback of the recorded video stream during the time interval.

6. The method of claim 5, wherein the first type of visual indication includes a change of size of a visual representation of any object fulfilling the rule, in the playback of the video stream.

7. The method of any of claims 1-4, wherein the representation of the scene is a snapshot of the scene or a visual representation of a background model of the scene.

8. The method of any of the preceding claims, wherein the object metadata for an object present in the scene includes at least one of the following: size, color, shape, center of gravity, object type, a coordinate for the object's appearance in the scene, a coordinate for the object's disappearance from the scene, an appearance time of the object, a disappearance time of the object, an amount of time during which the object is present in the scene, a velocity of the object, an identity of the object.

9. The method of any of the preceding claims, wherein the metadata event rule with the selected setting specifies at least one of the following: a size interval, a color, a shape, an area of the scene, an age of an object, a length of travel of an object, a direction of travel of an object, a velocity interval, a selection of object identities.

10. The method of any of the preceding claims, wherein objects present in the scene are found by at least one of the following:
determining differences between an image frame and one or more previous image frames,
determining differences between an image frame and a background model,
detecting specific object features in an image frame to find objects such as faces, humans, license plates or vehicles.

11. The method of any of the previous claims, further comprising adding information regarding camera settings during the recording, such as a pan, tilt, or zoom position, to the metadata stream, and including a specification of such camera settings in the metadata event rule setting.

12. An event based video monitoring system, comprising
an input arranged to receive a video stream from a camera monitoring a scene,
a video analytics unit arranged to analyze the video stream and generate a metadata stream with object metadata for objects present in the scene,
a recording unit arranged to record the metadata stream,
an input arranged to receive a selection of a setting for a metadata event rule and a selection of a time interval,
a metadata event rule engine arranged to analyze the recorded metadata stream during the selected time interval to find any objects which fulfill the metadata event rule with the selected setting, and for any object fulfilling the rule, output an indication that the object fulfills the rule,
a playback unit arranged to receive the indication from the metadata rule engine and for any object fulfilling the rule add a first type of visual indication onto a representation of the scene.

13. The video monitoring system of claim 12, wherein the playback unit is arranged to add a second type of visual indication for any object not fulfilling the rule.

14. The video monitoring system of claim 13, wherein the first and second type of visual indications include at least one of the following:
an overlay having a different color or outline for an object fulfilling the rule and for an object not fulfilling the rule,
an overlay having a different graphical symbol or text for an object fulfilling the rule and for an object not fulfilling the rule.

15. The video monitoring system of any of claims 12-14, wherein the recording unit is further arranged to record the video stream, the playback unit is arranged to receive the recorded video stream and the representation of the scene is a playback of the video stream during the time interval.
